# EUROPÄISCHE PATENTSCHRIFT

(11) **EP 2 293 955 B1**
(45) Veröffentlichungstag und Bekanntmachung des Hinweises auf die Patenterteilung: **07.03.2012**
(21) Anmeldenummer: 09778291.6
(22) Anmeldetag: 03.09.2009
(51) Int. Cl.: B60K 6/365, B60K 6/48, F16H 3/72, F16H 47/08, F16H 37/10

(54) **AUTOMATGETRIEBE MIT HYDRODYNAMISCHEM WANDLER**
AUTOMATIC TRANSMISSION HAVING HYDRODYNAMIC CONVERTER
TRANSMISSION AUTOMATIQUE À CONVERTISSEUR HYDRODYNAMIQUE

(30) Priorität: 03.09.2008 DE 102008045584
(43) Veröffentlichungstag der Anmeldung: 16.03.2011
(73) Patentinhaber: Voith Patent GmbH, 89522 Heidenheim (DE)
(72) Erfinder: BUSCH, Jörg, 89551 Königsbronn-Zang (DE)
(74) Vertreter: Dr. Weitzel & Partner
(86) Internationale Anmeldenummer: PCT/EP2009/006370
(87) Internationale Veröffentlichungsnummer: WO 2010/025911

(56) Entgegenhaltungen:
- WO-A-02/085659
- DE-A1- 10 152 488
- DE-A1- 19 923 316
- DE-A1-102007 001 840
- US-A1- 2002 193 200

## Beschreibung

Die Erfindung betrifft ein Automatgetriebe mit hydrodynamischem Wandler, welches einen Antriebsbereich aufweist, in welchem die Leistung in wenigstens zwei Leistungszweige aufteilbar ist, wobei ein Leistungszweig über den hydrodynamischen Wandler verläuft, und welches einen Abtriebsbereich aufweist, in welchem die wenigstens zwei Leistungszweige zusammenführbar sind.

Automatgetriebe mit hydrodynamischem Wandler sind aus dem Stand der Technik bekannt. Sie weisen im Allgemeinen einen verzweigten Leistungsfluss auf, bei welchem ein Teil der Leistung in bestimmten Betriebszuständen über den hydrodynamischen Wandler verläuft, während ein anderer Teil der Leistung parallel dazu über einen mechanisch gekoppelten Leistungszweig, welcher typischerweise Getriebeelemente aufweist, verläuft.

Ein Automatgetriebe mit den Merkmalen im Oberbegriff des Anspruchs 1 zeigt die US 2002/193200 A1.

Aus der DE 101 52 488 A1 ist ferner eine Antriebsvorrichtung für ein Fahrzeug bekannt, in welchem eine Wandlergetriebebaueinheit mit einer elektrischen Maschine kombiniert wird. Die elektrische Maschine wird über Elektrizität aus einem Generator angetrieben und ist mittelbar mit den Rädern des Fahrzeuges gekoppelt, wobei die Kopplung eine Getriebeeinheit mit dem hydrodynamischen Wandler vorsieht. Der Aufbau ist dabei prinzipiell ein klassischer serieller Hybridantrieb, bei dem über einen Verbrennungsmotor und einen Generator elektrische Energie erzeugt wird, welche dann über einen Elektromotor zum Antrieb genutzt wird. Da bei klassischen Hybridantrieben die elektrische Antriebsmaschine im Falle des Abbremsens des Fahrzeugs als Generator genutzt wird, besteht somit bei hybriden Antriebssystemen die Möglichkeit, Energie beim Bremsen rückzugewinnen.

Der beschriebene Aufbau hat jedoch den Nachteil, dass aufgrund der Kopplung über den hydrodynamischen Wandler kein Abbremsen über den Antriebsmotor im generatorischen Betrieb bis zum Stillstand möglich ist, sodass Energie verloren geht, die prinzipiell zurückgewonnen werden könnte.

Zum weiteren Stand der Technik wird auf die WO 02/085659 A1 und die DE 10 2007 001 840 A1 verwiesen.

Es ist die Aufgabe der vorliegenden Erfindung ein Automatgetriebe mit hydrodynamischem Wandler zu hybridisieren und hinsichtlich der Hybridisierung zu optimieren.

Erfindungsgemäß wird diese Aufgabe dadurch gelöst, dass zusätzlich eine elektrische Maschine mit dem Abtriebsbereich gekoppelt ist.

Der Abtriebsbereich des Automatgetriebes dient üblicherweise der Zusammenführung der zuvor verzweigten Leistungen, um diese dem Abtrieb zur Verfügung zu stellen. Üblicherweise kann dazu ein Leistungsstrang direkt mechanisch und ein Leistungsstrang über den hydrodynamischen Wandler übertragen werden. Diese beiden Leistungsstränge werden im Abtriebsbereich zusammengeführt. Der Antrieb des Automatgetriebes selbst kann dabei über beliebige Leistungsquellen erfolgen. Typischerweise wird hier jedoch zumeist eine Brennkraftmaschine verwendet werden.

Erfindungsgemäß ist nun zusätzlich eine elektrische Maschine mit dem Abtriebsbereich gekoppelt. Die Kopplung der elektrischen Maschine mit dem Abtriebsbereich erlaubt es somit Energie unmittelbar in den Abtrieb einzuspeisen oder im Falle von überschüssiger Energie im Abtrieb (beim Bremsen) diese mit der elektrischen Maschine im generatorischen Betrieb wieder in nutzbare elektrische Energie zurückzuwandeln. Durch die Einbindung der elektrischen Maschine in den Abtriebsbereich kann diese anstelle des oder zusammen mit dem hydrodynamischen Wandler Leistung alternativ zu - oder parallel zu - dem mechanischen Leistungszweig an den Abtrieb des Automatgetriebes liefern. Eine Betriebsweise könnte zum Beispiel sein, den Wandler beim Anfahren im 1. Gang mit der elektrischen Maschine zu unterstützen. Im weiteren Verlauf des Betriebes, das heißt im 2. und höheren Gängen, erfolgt der Vortrieb nur noch über mechanischen Leistungszweig, wobei die elektrische Maschine ggf. bei Beschleunigungsvorgängen unterstützend eingreifen und Leistung bereitstellen kann. Beim Abbremsen aus höheren Drehzahlen und eher hohen Bremsleistungen kann dann auch über den Wandler gebremst werden. Die elektrische Maschine kann dabei ggf. unterstützend eingreifen. Beim weiteren beziehungsweise normalen Abbremsen bis zum Stillstand, was mit dem Wandler alleine nicht möglich wäre kann dann in besonders vorteilhafter Weise die elektrische Maschine genutzt werden.

Gemäß der Erfindung ist dabei die elektrische Maschine direkt mit dem mechanischen Leistungszweig ohne den hydrodynamischen Wandler gekoppelt Dies ermöglicht einen einfachen und kompakten Aufbau, bei der die elektrische Maschine durch die direkte Einbindung sowohl im Antriebsfall als auch im Bremsfall effektiv genutzt werden kann.

Gemäß einer besonders günstigen Ausführungsform der vorliegenden Erfindung erfolgt die Kopplung der elektrischen Maschine dabei über ein Getriebeelement.

Das Getriebeelement, welches beispielsweise als Planetengetriebe ausgebildet sein kann, erlaubt es, die elektrische Maschine mit einer wählbaren oder festen Übersetzung in den Abtriebsbereich einzukoppeln, sodass die Auswahl der elektrischen Maschine flexibler gestaltet werden kann. So ist beispielsweise eine geringere Spreizung der Drehzahl bei der elektrischen Maschine möglich, wenn diese über ein Getriebeelement mit geeigneter oder - bei wählbaren Übersetzungen - mit geeigneten Übersetzung(en) in den Abtriebsbereich eingekoppelt werden kann. Außerdem erlaubt es diese Konstellation, höhere Abtriebs-Drehzahlen zu realisieren.

Gemäß einer besonders günstigen Weiterbildung der Erfindung ist es außerdem vorgesehen, dass die elektrische Maschine über ein Kupplungselement vom Abtriebsbereich entkoppelbar ist.

Diese Entkopplung der elektrischen Maschine, welche beispielsweise über eine Lamellenkupplung erfolgen kann, erlaubt es, die elektrische Maschine vollkommen abzukoppeln, sodass ein Aufbau entsteht, welcher einem herkömmlichen Getriebe mit hydrodynamischem Wandler vergleichbar ist. Damit besteht dann die vorteilhafte Möglichkeit zwischen einem hybridisierten Betrieb und einem herkömmlichen Betrieb zu wählen.

Gemäß einer sehr vorteilhaften Variante der Erfindung ist es ferner vorgesehen, dass die elektrische Maschine über eine Kupplung direkt mit dem Abtrieb koppelbar ist.

Durch die direkte Kopplung des Abtriebs des Automatgetriebes mit der elektrischen Maschine wird eine Übersetzung von 1:1 im Abtrieb erreicht. Dementsprechend muss die elektrische Maschine keine hohe Maximaldrehzahl aufweisen und kann damit besonders kostengünstig, energieeffizient, robust und platzsparend ausgelegt werden.

In einer sehr günstigen und vorteilhaften Ausgestaltung des erfindungsgemäßen Automatgetriebes ist es dabei vorgesehen, dass der Abtriebsbereich lediglich ein Planetengetriebe mit fester Kopplungsstruktur aufweist.

Dieser Aufbau, bei dem im Abtriebsbereich des Automatgetriebes lediglich ein Planetengetriebe mit fester Kopplungsstruktur angeordnet ist, erlaubt es, das Automatgetriebe sehr einfach, mit wenigen Bauteilen und damit besonders kostengünstig herzustellen. Der Aufbau ist außerdem extrem kompakt zu realisieren, sodass Bauraum eingespart wird, welcher beispielsweise durch die elektrische Maschine genutzt werden könnte. Der Nachteil bei diesem Aufbau liegt nun darin, dass über den mechanischen beziehungsweise den mechanisch/hydrodynamischen Leistungsstrang kein Rückwärtsgang realisiert werden kann, da die Kopplungsstruktur im Abtriebsbereich nicht veränderbar ist. Aufgrund der elektrischen Maschine kann jedoch ein Rückwärtsgang sehr einfach und effizient über die elektrische Maschine realisiert werden, sodass die fehlende Möglichkeit zur Änderung der Kopplungsstruktur keinen nennenswerten Einfluss auf die Funktionalität des erfindungsgemäßen Automatgetriebes hat. Ohne eine Einbuße an Funktionalität kann jedoch der Aufbau entsprechend einfach und kompakt realisiert werden.

Gemäß einer vorteilhaften Weiterbildung der Erfindung ist die elektrische Maschine ist dabei in das Gehäuse des Automatgetriebes integriert.

Damit entsteht ein sehr kompakter Aufbau des Automatgetriebes. Dieser Aufbau kann es außerdem ermöglichen, das Automatgetriebe beziehungsweise dessen Gehäuse hinsichtlich seiner äußeren Abmessungen so zu gestalten, dass eine hybridisierte Version durch einen ähnlichen Bauraumbedarf gegen eine herkömmliche ausgetauscht werden kann. Somit wird fahrzeugseitig ein modularer Aufbau möglich, in dem mit minimalem Aufwand und bei unverändertem Chassis eine Hybridisierung ergänzbar oder nachrüstbar ist.

Weitere vorteilhafte Ausgestaltungen der Erfindung ergeben sich aus den nachfolgend anhand der Zeichnungen dargestellten Ausführungsbeispielen.

Dabei zeigen:
- Figur 1: eine erste Ausführungsform des erfindungsgemäßen Automatgetriebes;
- Figur 2: eine weitere Ausführungsform des erfindungsgemäßen Automatgetriebes in einer ersten Ausgestaltung;
- Figur 3: die Ausführungsform gemäß Figur 2 in einer alternativen Ausgestaltung; und
- Figur 4: die Ausführungsform gemäß Figur 2 in einer weiteren alternativen Ausgestaltung.

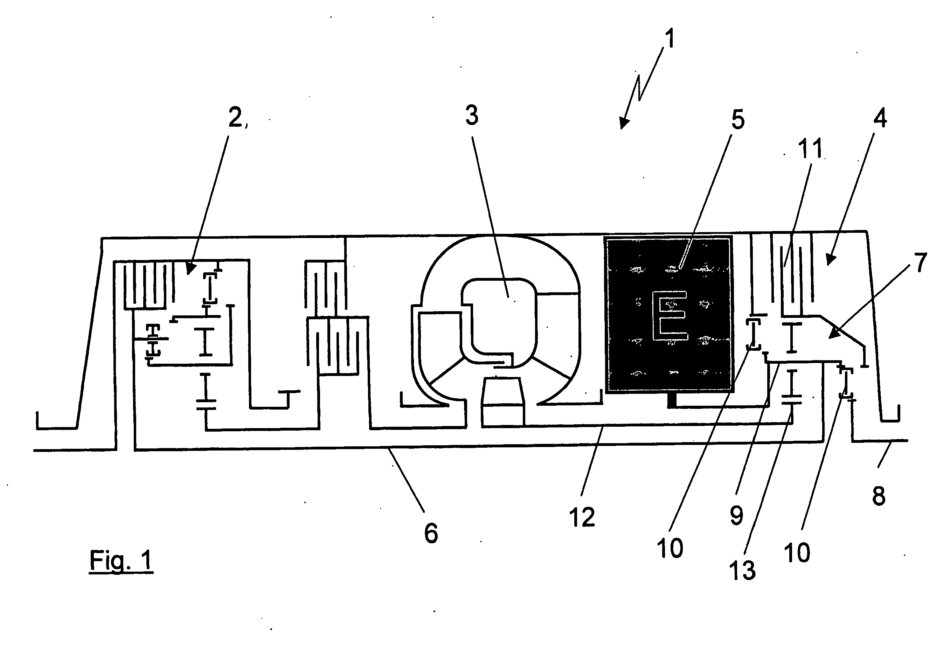

Figur 1 zeigt ein Automatgetriebe 1 mit einem Antriebsbereich 2, einem hydrodynamischen Wandler 3 und einem Abtriebsbereich 4. Zusätzlich weist das Automatgetriebe 1 eine elektrische Maschine 5 auf. Der Antriebsbereich 2 des Automatgetriebes 1 ist in der hier gewählten Darstellung beispielhaft ausgeführt und entspricht dem Aufbau, welcher aus der deutschen Patentanmeldung DE 10 2008 010 064 grundsätzlich bekannt ist. Dieser in Figur 1 dargestellte Aufbau des Antriebsbereichs 2 ist dabei jedoch nur beispielhaft zu verstehen, da die grundlegende Idee der Erfindung mit jeglicher Art von Antriebsbereich 2 funktioniert, welche eine Leistungsverzweigung in wenigstens zwei Leistungszweige realisiert.

In dem hier dargestellten Ausführungsbeispiel sind die beiden Leistungszweige einmal ein Leistungszweig, welcher über den hydrodynamischen Wandler 3 verläuft und parallel dazu ein Leistungszweig 6, welcher rein mechanisch gekoppelt parallel zu dem Leistungszweig durch den hydrodynamischen Wandler 3 verläuft. Diese beiden Leistungszweige werden dabei in dem Abtriebsbereich 4 über ein geeignetes Getriebe 7 wieder zusammengeführt. Auch hier ist die Darstellung des Abtriebsbereichs 4 und des Automatgetriebes 1 lediglich beispielhaft zu verstehen, wobei die Funktionalität grundlegend der entspricht, die in der deutschen Anmeldung DE 10 2008 027 946 beschrieben ist. Alternativ dazu wäre auch eine herkömmlicher Aufbau mit typischerweise zwei Planetensätzen im Abtriebsbereich denkbar.

Zusätzlich zu dem bis hierher, bezüglich Antriebsbereich 2, hydrodynamischem Wandler 3 und Abtriebsbereich 4, bekannten Aufbau des Automatgetriebes 1 ist die oben bereits erwähnte elektrische Maschine 5 zusätzlich vorhanden. Die elektrische Maschine 5 ist dabei in das Gehäuse des Automatgetriebes 1 mit integriert, sodass eine kompakter Aufbau entsteht. Die elektrische Maschine 5 wirkt im Ausführungsbeispiel der Figur 1 auf einen Abtrieb 8 des Automatgetriebes 1. Hierfür ist die elektrische Maschine 5 mit dem Steg 9 des als Planetengetriebe ausgebildeten Getriebes 8 des Abtriebsbereichs 4 fest verbunden. Ebenfalls fest mit diesem Steg 9 ist der rein mechanische Leistungszweig 6 verbunden. Durch geeignete Ansteuerung von Klauenkupplungen 10 und/oder der Lamellenkupplung 11 kann so die elektrische Maschine mit der Übersetzung 1:1 mit dem mechanischen Leistungszweig 6 zusammen/unterstützen oder falls der mechanische Leistungszweig 6 über eine geeignete Schaltung im Bereich des Antriebsbereichs 2 abgekoppelt ist, allein auf den Abtrieb 8 wirken. Je nachdem, ob Traktionsenergie am Abtrieb 8 erforderlich ist oder Bremsenergie am Abtrieb 8 anfällt, kann die elektrische Maschine 1 dabei als Motor oder Generator eingesetzt werden, welche entweder elektrische Energie in Vortriebsleistung umwandelt oder Bremsenergie zu elektrischer Energie zurückwandelt. Im Gegensatz reinen zum Bremsen über den Wandler 3 als verschließfreie Dauerbremse kann mit der elektrischen Maschine 5 ein Abbremsen bis zum Stillstand realisiert werden.

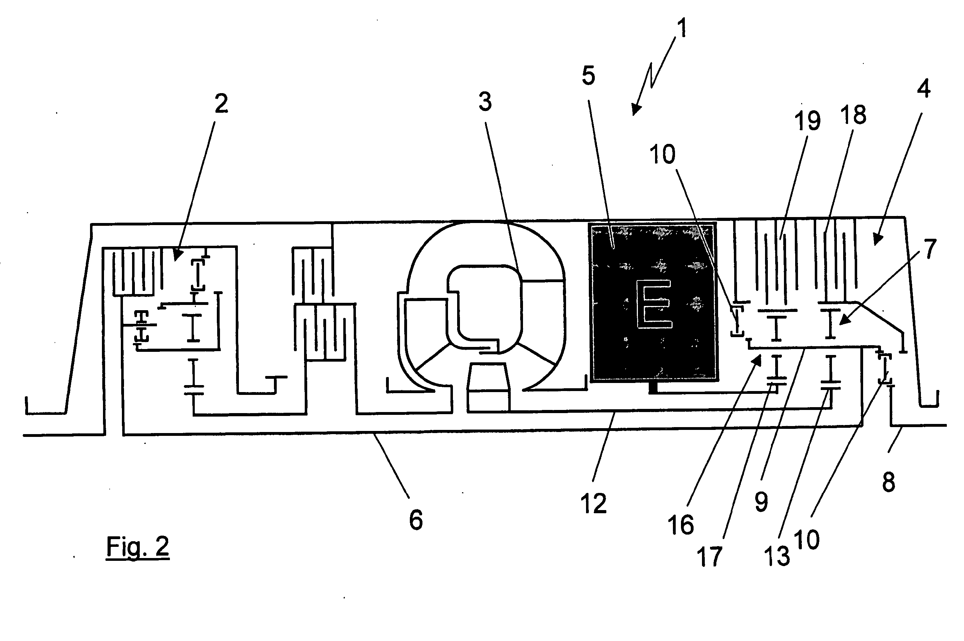

In Figur 2 ist eine alternative Ausführungsform des Automatgetriebes 1 dargestellt. Der Abtriebsbereich 4 weist dabei einen zusätzlichen Planetensatz 16 auf, welcher über einen gemeinsamen Steg 9 mit dem Planetensatz 7 und mit dem rein mechanischen Leistungszweig 6 verbunden ist. Im Falle dass der Aufbau des Abtriebsbereichs 4 bereits mehr als einen Planetensatz aufweisen würde, zum Beispiel zwei Planetensätze - wie häufig üblich -, würde es sich bei dem zusätzlichen Planetensatz 16 dann beispielsweise um den 3. Planetensatz handeln.

Über das Planetengetriebe 7 und hier insbesondere über die Sonne 13 desselben wird wiederum der Leistungszweig über den hydrodynamischen Wandler 3 eingekoppelt. Die elektrische Maschine 5 ist über das zusätzliche Planetengetriebe 16 eingekoppelt, wobei die elektrische Maschine 5 ebenfalls mit der Sonne 17 dieses Planetengetriebes 16 verbunden ist. Dieser Aufbau, bei dem die elektrische Maschine 5 und der hydrodynamische Wandler jeweils über ein eigenes Getriebe in dem Abtriebsbereich 4 eingekoppelt werden, erlaubt es, den Aufbau noch variabler zu gestalten, da unterschiedliche Übersetzungen für die elektrische Maschine 5 und den Leistungszweig über den hydrodynamischen Wandler 3 gewählt werden können. Beide Getriebe 7, 16 sind dabei über Lamellenkupplungen 18, 19 so angesteuert, dass diese durch Betätigen beziehungsweise Nichtbetätigen entsprechend geschaltet werden können, sodass entweder die elektrische Maschine 5 und der hydrodynamische Wandler 3 eingekoppelt sind, oder dass jeweils nur eines der Elemente oder auch keines der Elemente in den Abtriebsbereich 4 eingekoppelt ist.

Außerdem kann eine Kupplung, insbesondere eine Lamellenkupplung, welche hier nicht dargestellt ist, vorgesehen, welche zwischen dem Steg 9 und der Sonne 17 des Planetensatzes 16 angeordnet ist. Dieser Aufbau ermöglicht es, die der elektrischen Maschine 5 mit dem Abtrieb 8 zu koppeln. Diese Variabilität einer zweiten Übersetzung, insbesondere einer 1:1 Übersetzung ermöglicht es, bei der Auslegung der elektrischen Maschine 5 weniger Aufwand treiben zu müssen, da hier durch die zusätzliche Übersetzung die benötigte Drehzahlspreizung verringert, oder alternativ dazu, die erreichbare Drehzahl erhöht werden kann. Die elektrische Maschine 5 lässt sich so besser auf einen in sich kleineren Betriebsbereich optimieren, sodass die elektrische Maschine 5 hinsichtlich konstruktiver Aspekte optimiert und damit wirtschaftlicher und energieeffizienter gestaltet werden kann. Damit kann eine elektrische Maschine mit geringerer maximaler Drehzahl eingesetzt werden.

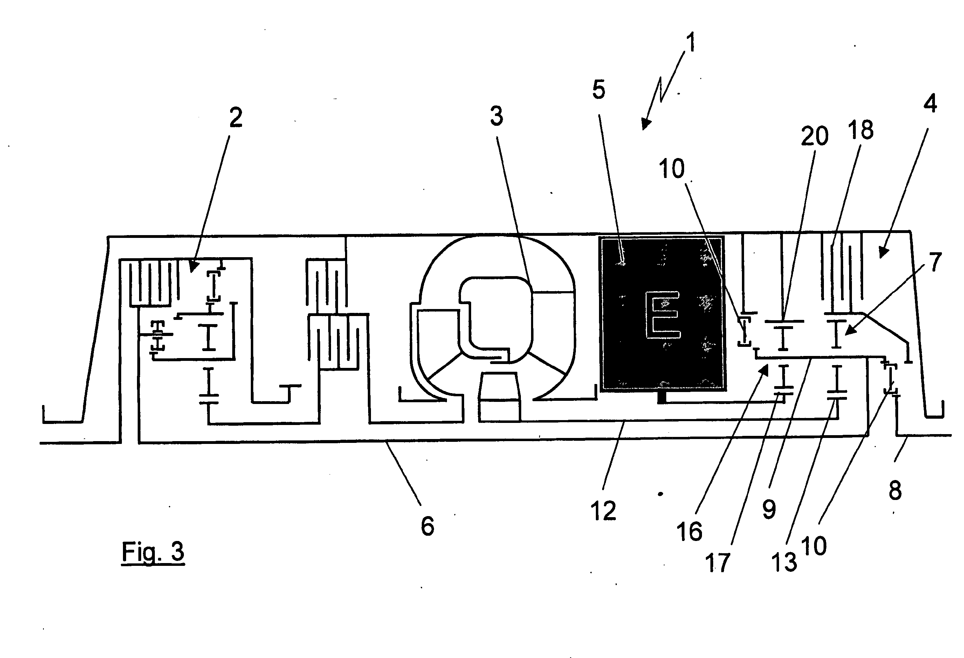

Der Aufbau in Figur 3 zeigt wiederum eine vergleichbare Ausgestaltung wie in Figur 2, wobei hier jedoch lediglich eine Lamellenkupplung 18 vorhanden ist, sodass nur der hydrodynamische Wandler 3 entsprechend schaltbar ist, während die elektrische Maschine 5 fest eingekoppelt bleibt.

Ergänzend hierzu wären in nicht dargestellten Ausführungsformen weitere Aufbauten denkbar. So könnten zum Beispiel beide Getriebe 7, 16 ohne Lamellenkupplung fest gekoppelt sein, oder alternativ dazu lediglich das zusätzliche Getriebe 16 eine Lamellenkupplung 19 aufweisen würde, nicht jedoch das Getriebe 7 für den Leistungszweig über den hydrodynamischen Wandler 3. Analog zu den Ausführungen zu Figur 2 wäre auch in der Ausführung der Figur 6 über die hier nicht dargestellte Lamellenkupplung 15 die direkte Verbindung des gemeinsamen Stegs 9 mit der Sonne 17 des Planetengetriebes 16 denkbar, sodass eine direkte 1:1-Ankopplung der elektrischen Maschine 5 an den Abtrieb 8 möglich wird.

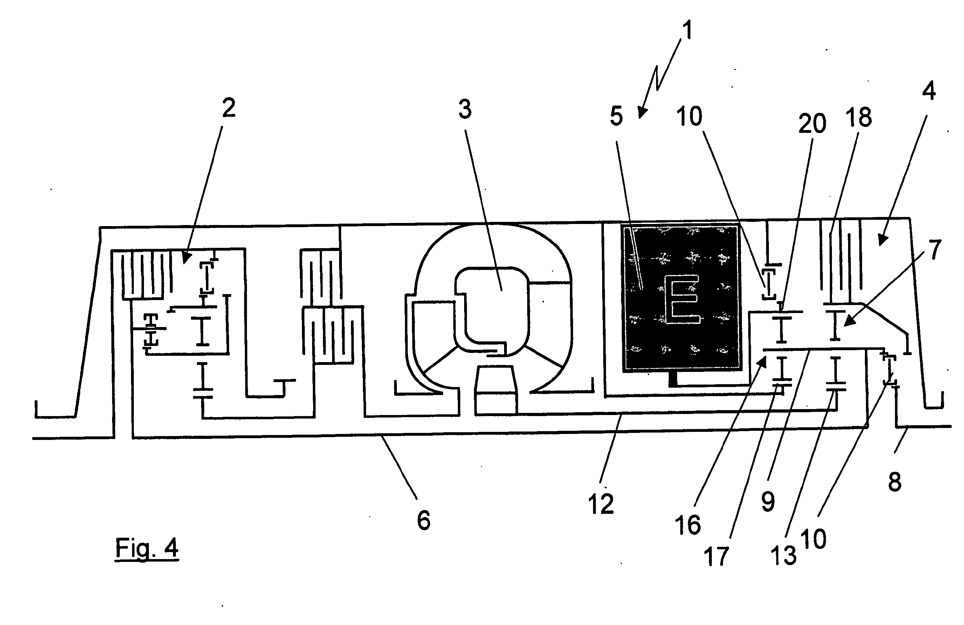

In Figur 4 ist nun ein Aufbau analog dem der Figur 3 zu erkennen. Der einzige Unterschied ist hier, dass die Einkopplung der elektrischen Maschine nicht über die Sonne 17 des Planetengetriebes 16 erfolgt, sondern über ein Hohlrad 20 desselben. War in Figur 3 das Hohlrad 20 fest mit dem Gehäuse des Automatgetriebes 1 verbunden, so ist nun die Sonne 17 fest mit dem Gehäuse des Automatgetriebes 1 verbunden. Die elektrische Maschine 5 ist über das Hohlrad 20 eingekoppelt. Der sonstige Aufbau entspricht dem der vorhergegangenen Figur. prinzipiell soll das in Figur 4 dargestellte Ausführungsbeispiel zeigen, dass bei allen beschriebenen Anordnungen und gezeigten Aufbauten mit Planetengetrieben die jeweils dargestellte Konstellation beispielhaft zu verstehen ist. Wie bei Planetengetrieben üblich, ist es grundsätzlich immer denkbar, entsprechende Kräfte über Sonne, Hohlrad, Steg einzukoppeln und/oder auszukoppeln. Diese Kopplungsschemen sind dabei, wie es dem Fachmann geläufig ist, untereinander austauschbar, ohne dass dies den grundlegenden Aufbau der hier dargestellten Ausführungsbeispiele verändert, da der erfindungsgemäße Gedanke auch mit jeder anderen denkbaren Kupplungsstruktur der hier dargestellten Planetensätze realisierbar wäre. Auch in der Darstellung des Automatgetriebes 1 gemäß Figur 7 wäre eine direkte Verbindung des Abtriebs 8 mit der elektrischen Maschine 5 denkbar. Auch hier müsste eine entsprechende Kopplung über die hier nicht dargestellte Kupplung 15 erfolgen. Anders als bei den beiden vorhergehenden Figuren müsste hier jedoch nicht die Sonne 17 mit dem gemeinsamen Steg 5 verbunden werden, sondern das Hohlrad 20 des Planetengetriebes 16.

## Patentansprüche

1. Automatgetriebe mit hydrodynamischem Wandler (3), welches einen Antriebsbereich aufweist, in welchem die Leistung in wenigstens zwei Leistungszweige aufteilbar ist, wobei ein Leistungszweig (12) über den hydrodynamischen Wandler verläuft, und welches einen Abtriebsbereich (4) aufweist, in welchem die wenigstens zwei Leistungszweige zusammenführbar sind, wobei zusätzlich eine elektrische Maschine (5) mit dem Abtriebsbereich (4) gekoppelt ist,
**dadurch gekennzeichnet, dass** die elektrische Maschine (5) direkt mit dem wenigstens einem Leistungszweig (6) ohne den hydrodynamischen Wandler (3) gekoppelt ist.

2. Automatgetriebe nach Anspruch 1, **dadurch gekennzeichnet, dass** die Kopplung der elektrischen Maschine (5) über wenigstens ein Getriebeelement (7,16) erfolgt.

3. Automatgetriebe nach Anspruch 1 oder 2, **dadurch gekennzeichnet, dass** die elektrische Maschine (5) über ein Kupplungselement (11,19) vom Abtriebsbereich entkoppelbar ist.

4. Automatgetriebe nach einem der Ansprüche 3 bis 8, **dadurch gekennzeichnet, dass** der Abtriebsbereich (4) genau ein Planetengetriebe (7) mit fester Kopplungsstruktur aufweist.

5. Automatgetriebe nach Anspruch 2 oder 3, **dadurch gekennzeichnet, dass** die elektrische Maschine (5) über eine Kupplung (15) direkt mit dem Abtrieb (8) des Abtriebsbereichs (4) koppelbar ist.

6. Automatgetriebe nach einem der vorhergehenden Ansprüche, **dadurch gekennzeichnet, dass** die elektrische Maschine (5) in ein Gehäuse des Automatgetriebes (1) integriert ist.

## Claims

1. An automatic transmission with hydrodynamic converter, which includes a drive region, wherein the power can be split in at least two power branches, wherein a power branch runs across the hydrodynamic converter, and which includes a driven region, wherein said at least two power branches can be united, wherein additionally one electrical machine (5) is coupled with the driven region (4), **characterised in that** the electrical machine (5) is coupled directly to at least one power branch (6) without the hydrodynamic converter (3).

2. An automatic transmission according to claim 1, **characterised in that** the electrical machine (5) is coupled via at least one transmission element (7, 16).

3. An automatic transmission according to claims 1 or 2, **characterised in that** the electrical machine (5) can be decoupled from the driven region using a coupling element (11, 19).

4. An automatic transmission according to claims 2 or 3, **characterised in that** the driven region (4) presents exactly one planetary gear (7) with a fixed coupling structure.

5. An automatic transmission according to any of the preceding claims, **characterised in that** the electrical machine (5) can be coupled directly to the power take-off (8) of the driven region (4) via a coupling (15).

6. An automatic transmission according to any of the preceding claims, **characterised in that** the electrical machine (5) is integrated in a housing of the automatic transmission (1).

## Revendications

1. Transmission automatique pourvue d'un convertisseur hydrodynamique (3), présentant une zone d'entraînement (2), dans laquelle la puissance est divisible en au moins deux branches de puissance, une branche de puissance (12) passant par le convertisseur hydrodynamique, et présentant une zone de prise de force (4), dans laquelle les au moins deux branches de puissance peuvent être regroupées, une machine électrique (5) étant en outre accouplée à la zone de prise de force (4), **caractérisée en ce que** la machine électrique (5) est accouplée directement à ladite au moins une branche de puissance (6) sans le convertisseur hydrodynamique (3).

2. Transmission automatique selon la revendication 1, **caractérisée en ce que** l'embrayage de la machine électrique (5) fait appel à au moins un élément de transmission (7, 16).

3. Transmission automatique selon la revendication 1 ou 2, **caractérisée en ce que** la machine électrique (5) peut être découplée de la zone de prise de force par l'intermédiaire d'un élément d'accouplement (11,19).

4. Transmission automatique selon l'une des revendications 3 à 8, **caractérisée en ce que** la zone de prise de force (4) présente précisément un engrenage planétaire (7) de structure d'accouplement fixe.

5. Transmission automatique selon la revendication 2 ou 3, **caractérisée en ce que** la machine électrique (5) peut être accouplée directement à la prise de force (8) de la zone de prise de force (4) à l'aide d'un accouplement (15).

6. Transmission automatique selon l'une quelconque des revendications précédentes, **caractérisée en ce que** la machine électrique (5) est intégrée dans un carter de la transmission automatique (1).
